# EUROPEAN PATENT APPLICATION

(11) **EP 1 374 666 A1**
(43) Date of publication of application: **02.01.2004**
(21) Application number: 03076898.0
(22) Date of filing: 17.06.2003
(51) Int. Cl.: A01G 9/14

(54) **System with plant carriers that can be moved over rails**

(30) Priority: 17.06.2002 NL 1020882
(71) Applicant: W/M Systems B.V., 3155 RR Maasland (NL)
(72) Inventor: Jansen, Wilhelmus Henricus Antonius, 1619 BZ Andijk (NL)
(74) Representative: Jorritsma, Ruurd

(57) **Abstract**

Mobile container (4) for carrying plants. The container (4) is constructed as a through-like construction (5) and the frame that supports this container (4) consists of a few cross-members (6) that are joined directly to the trough-like construction (5). The cross-members (6) are provided with wheels (8) and the like which enable movement over rails (2,3). As a result of this construction it is possible to treat plants from one side in a central location. The movement of the cross-members (6) can be effected under computer control.

## Description

The present invention relates to a system comprising two parallel spaced apart stationary rails and a number of elongated containers for plants that can be moved over said rails, each container comprising an elongated carrier for said plants and at least two frame sections supporting said carrier.

A system of this type is disclosed in US Patent 4 476 651. This publication discloses a number of elongated carriers constructed as troughs that can be coupled to one another at a fixed spacing with frame sections. The rails are provided with rollers over which the underside of the carriers can be moved. In this way a large number of plants can be moved at the same time. The effect to be achieved with a system of this type is comparable to a roll container. This is a carrier that is in the form of a table and is optionally provided with legs, which can have a normal length to a very small length, and provided with wheels for transport over rails. Plants are cultivated on such tables and transported to a treatment location for possible treatment. Such roll containers have found general acceptance in, in particular, cultivation of plants in greenhouses. It is no longer necessary for staff to walk long distances to get to the plants and any tools or other parts that are needed for treatment of the plants can be kept at the central treatment location.

One problem with such tables is that because of the relatively large size the persons carrying out the treatment frequently have to bend a long way over the tables. After all, the width of such tables is more than 1 m. This problem can be solved by approaching a table from two sides, but this means that staff have to cross the path of the roll containers. Furthermore, such a construction is relatively complex because the table consists of a flat surface beneath which a frame construction consisting of longitudinal runners and cross-members is fitted, to which the supports for the wheels are then joined.

As a further development it has been proposed to place troughs on the roll containers and to put plants in these. This is used in particular for substrate cultivation where the substrate is placed in the troughs. With this arrangement the trough is simply joined to the existing roll container/table.

The aim of the present invention is to provide a simplified construction by means of which it is still possible to move plants around a greenhouse, but with which the plants placed in the container are easily accessible from one side. Furthermore, the mobile container must be inexpensive to produce and particularly robust. This aim is realised with a mobile system as described above in that said frame sections are provided with displacement means for movement along said rails and in that each container is provided with individual frame sections.

According to the present invention a number of elongated carriers are used, which can be moved independently of one another. According to a particularly advantageous embodiment of the invention, it is possible, by means of the individual frame sections, to be able to vary the spacing between the containers by different movement over the rails.

According to a further advantageous embodiment, the construction is such that the elongated carriers never come into contact with one another but are kept apart by the frame sections. The rails are common for the various containers. The frame sections are preferably constructed as beams.

Preferably these are so constructed that they can be slid into one another over a short distance, so that a particularly stable train is obtained. More particularly, the ends of the members are so constructed that when they are slid into one another one of said members rises relative to said other member. As a result, one set of wheels per beam can suffice when the members are in the position in which they have been slid into one another. When the beams are moved without them being slid into one another, a second support point per beam is needed and this can be formed by a slider block, which can be constructed easily and inexpensively. A slider block is sufficient because only a small portion of the weight of the carrier has to be supported by this.

According to an advantageous embodiment of the invention, driving of the series of containers is preferably effected by means of means engaging on the beams. More particularly, these are two rollers located opposite one another, at least one of which is driven.

The carrier can be provided with water by fitting water collection means in the form of a receptacle. These are positioned below water supply means, after which water and any additives can be introduced. A water discharge can also be present. Preferably, the carrier is arranged somewhat inclined in the use position and the water supply location is close to the highest end and the water discharge location is close to the lowest end of the construction, so that water moves from the supply location to the discharge location.

The water collection means described above are preferably so constructed that the inlet part thereof has an appreciable length in the direction the containers are transported, that is to say in the direction of the longitudinal axis of the beams. As a result the positioning of the receptacle with respect to the stationary water supply means is not critical. However, a conflict with inlet parts of adjacent receptacles of adjacent containers could arise as a result. In order to solve this problem, it is proposed according to the invention to construct such receptacles, and more particularly the inlet parts thereof, at an angle in the direction of movement of the containers (longitudinal direction of members) such that these overlap one another, that is to say lie on top of one another.

It must be understood that the construction described above where inlet parts of the receptacle slide over one another can also be used with other mobile containers, such as with roll containers.

Apart from movement in the longitudinal direction of the beams, movement in the transverse direction, that is to say coincident with the longitudinal axis of the trough-like construction, is also needed. According to an advantageous embodiment of the invention, there are special drive means for this purpose. So as not to experience any interference with the rails extending in the longitudinal direction, it is proposed to install a lifting device. That is to say, the containers move along the rails towards the lifting device and, on reaching the device for moving into the transverse direction, the containers are either lowered with the rails or the containers are raised by special drive means and transport then takes place in the transverse direction. According to an advantageous embodiment of the invention, this transport can be effected by engaging on the reinforcing flange parts projecting from the side walls of the trough-like construction. In this way transverse movement can be provided with the aid of chains, roller tracks and the like. In this way it is possible, for example, to treat individual containers at a treatment station.

The water discharge of the trough-like construction can be constructed such that it can be closed off.

There can be a common control to operate all discharges of the troughs at the same time.

The container, and more particularly the carrier, preferably comprises a trough-shaped part or trough-like construction. More particularly, a trough-like construction is used which has load-bearing side walls. Because these side walls are load-bearing, the construction of the mobile container can furthermore be made particularly simple. In practice, two or more cross-members (depending on the length of the trough) that are firmly joined to the trough and to which the wheels or other means for movement have been fitted will be sufficient to form a stable construction. That is to say, "direct" is understood to mean that a complex frame construction, as in the state of the art in the case of roll containers, is no longer necessary. The present invention is distinguished from the construction described above, where a trough is placed on a roll container, in that the parts of the trough (walls) that extend essentially vertically are essential as load-bearing construction. The trough-like construction can be made either of steel or of an aluminium (alloy). If steel is employed, rolled sections are used, whilst in the case of aluminium extrusion will be preferred. By making use of extrusion, chambers can be made in the vertical walls and close to the base or other linking location, as a result of which the rigidity can increase. The minimum height of the vertical walls is approximately 50 mm, whilst in practice the construction will not be made higher than 200 mm.

It will be understood that essentially vertical is understood to mean all customary routes for extension of troughs known in the state of the art. A trough-like construction is understood to be any construction having two walls extending essentially vertically and a linking part located between them. This can be a base, but also a transverse reinforcing element or linking plate fitted at the top or halfway up the vertical walls. The various features are dependent on the application. In the case of substrate cultivation, a conventional trough with side walls and base will be used. In the case of pot plants it can be preferable to make the link between the opposing side walls at the top. Such a linking plate, which may or may not be integral with the side walls but in any event is firmly joined to these, can be provided with openings for accommodating the pots.

Movement of the beams over the rails preferably takes place by means of wheels. It is also possible to use slider blocks.

It will be understood that as a result of the individual construction of the containers, these can be handled individually as indicated, inter alia, above. It is also possible to lift these off the rails with the aid of crane or similar constructions and to transfer them to a different position. Lift constructions and the like (fork-lift truck) can also be used. It is possible to move several containers at the same time.

Furthermore, signalling means interacting with the container can be present on the rails to detect the movement of the various containers and to correct this where necessary. There can also be constructions for removing a container from a rail track in some other way.

It must be understood that the present invention can be combined with further constructions. After all, apart from the cultivation of plants in the plant carriers described above it is necessary to put the plants in the carriers and to harvest them in due course. Preferably, this takes place in a central location.

As a first step it is necessary to empty and to clean the carriers. The plant then has to be placed in position, optionally in pots, and the first cultivation table can take place. The plants can then be placed closer together or further apart. Harvesting can then take place. It is possible to carry out harvesting in one step and then to re-use the plant. It is also possible to remove the plant after harvesting and according to a further embodiment it is possible to carry out only partial harvesting and to continue to cultivate the remaining plants. There can be additional special further devices, such as roller tracks, chain conveyors, treatment stations, reversing tracks and the like, as a result of all these steps.

It can be seen from the above that the present invention is particularly suitable for cultivating plants on a large scale. In this context consideration is given to surface areas of more than 1 hectare in which there is a large number of troughs, several hundred, which are handled in the manner described above.

It will be understood that when handling on a large scale computerised control is desirable for moving the containers.

The invention will be explained in more detail below with reference to illustrative embodiments shown in the drawing. In the drawing:
Fig. 1 shows a perspective view of the system according to the invention;
Fig. 2 shows, diagrammatically, a side view of a container according to a first embodiment of the invention;
Fig. 3 shows the cross-section along the line III-III in Fig. 2;
Fig. 4 shows the cross-section along the line IV-IV in Fig 2;
Fig. 5 shows the lifting and transverse movement device according to the invention; and
Fig. 6 shows, in an exploded view, a variant of the trough-like construction according to the present invention.

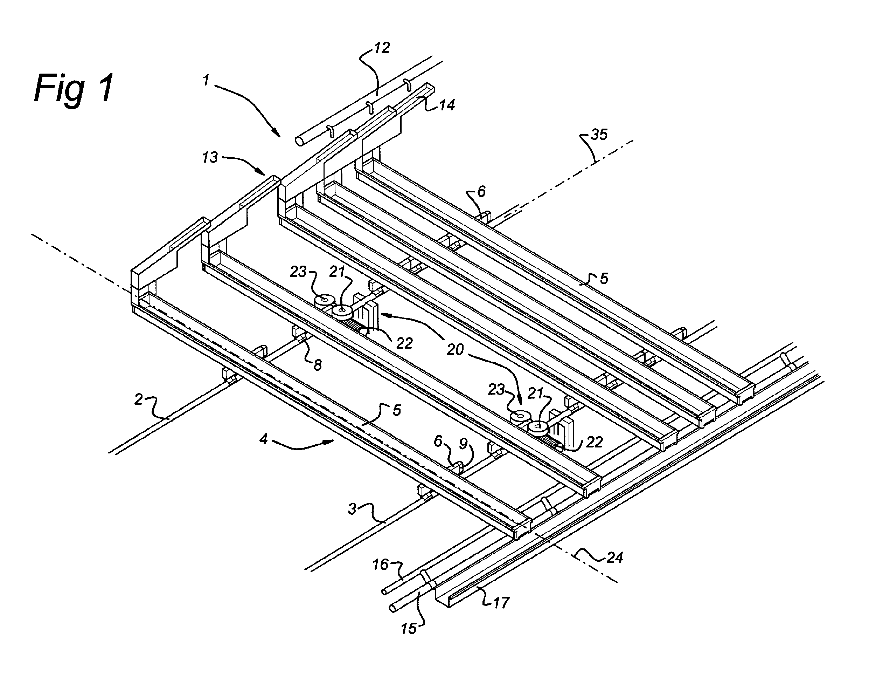

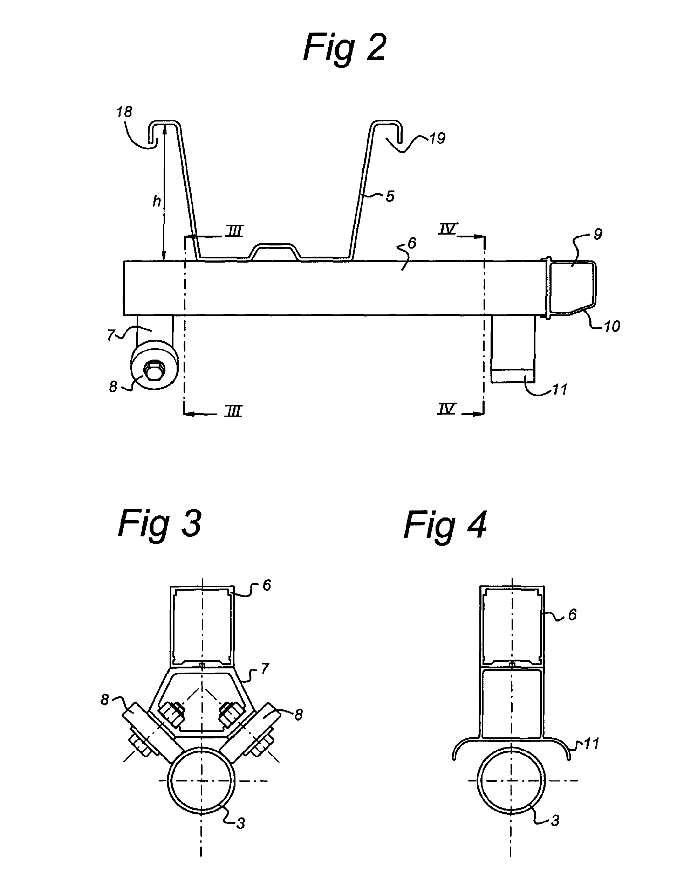

In Fig. 1 a system according to the invention is indicated by 1. This system consists of a number of containers 4 that can be moved over rails 2, 3. Each container 4 consists of trough-like construction 5 with longitudinal axis 24 beneath which a (cross-)member 6 with axis 35 is fitted. A wheel block 7 (see Fig. 3) is mounted on each cross-member 6, on which wheel block 7 wheels 8 are fitted which bear on rail 2 or 3. It will be understood that the shape of the rail 2, 3 and the structure of the wheels 8 can be varied as desired. There is no set of wheels on the other end of the member, but a skid 11. Compared with wheels, such a skid is particularly inexpensive and simple to produce. It can be seen from Fig. 2 that trough 5 is a trough 5 that is customary in substrate cultivation. This trough is provided with vertical walls with a working height h and flanged parts 18, 19 close to the top ends. At the end, member 6 is provided with a coupling part 9 with chamfering 10. At the other end (on the left in Fig. 2), member 6 is hollow. This means that if two members slide into one another, as is shown on the right in Fig. 1, the right-hand part of the left-hand member (as seen in the figures) will rise as a result of the effect of the chamfering 10 and the skid 11, as shown in Figs. 2 and 4, leaves rail 3. This means that when a series of members are in the coupled position, the skids have no function and there is support only with the aid of wheels 8. That is to say, the skids 11 are effective only when sliding the members into one another.

A water supply, provided with shut-off valves that are not indicated in more detail, is indicated by 12 in Fig. 1. This water supply opens into the receptacles 13 provided with a relatively long inlet part 14. The length of the inlet part 14 is such that accurate positioning of the mobile container relative to the stationary water dispensing point is not critical and it is always guaranteed that there is no mess. As can be seen from Fig. 1, the receptacle 13 and more particularly the inlet parts 14 are constructed somewhat inclined, so that, as can be seen from the right-hand part of Fig. 1, when a series of containers are slid into one another receptacles 13 are able to overlap undisturbed. Such a construction can also be used with other mobile containers, such as roll containers.

The troughs 5 are positioned with a slight fall, so that water moves from receptacle 13 to the right and emerges at a discharge, which is not shown in more detail, if this is also present. This discharge can have a shut-off valve and when opened water runs into stationary gutter 17. Operation of this discharge can be implemented with the aid of a push rod 16 fixed to rotary rod 15, by means of which a large number of troughs 5 can be operated at the same time.

The containers are driven by engagement on the members 6. Drives 20, consisting of motors 22 that drive rollers 21, are present for this purpose. There are contact rollers 23 at the top of member 6.

Transport in the direction of axis 35 over rails 2, 3 is possible by means of this drive 20.

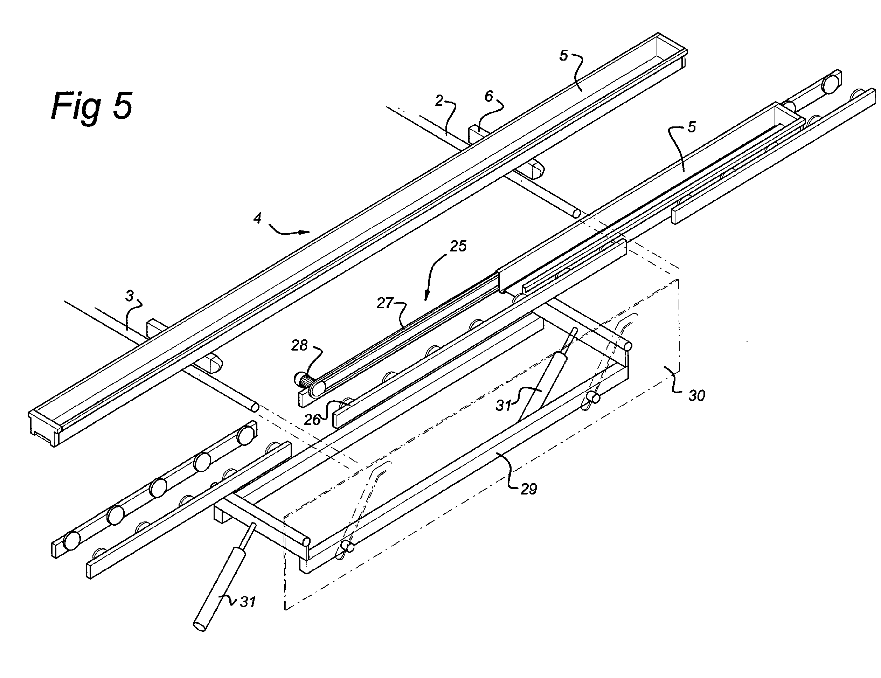

The construction according to Fig. 5 is proposed to enable individual transport of the containers, that is to say when these are not coupled to other containers, in the direction of the axis of 24. This construction consists of a main frame 30 and an auxiliary frame 29. Auxiliary frame 29 can be moved up and down relative to the main frame 30 with the aid of lift cylinders 31. On the one side, a roller track 26 and, on the other side, a roller chain 27 are located some distance apart on the main frame 30. The roller chain 27 is driven by motor 28 and together with this motor forms a drive 25. Roller track 26 and roller chain 27 are so constructed that these are able to engage below flanged part 18 and flanged part 19, respectively. Auxiliary frame 29 supports the rails 2 and 3.

This device functions in such a way that if the containers are located with the trough and more particularly the flanged parts 18, 19 above roller chain 27 and roller track 26, there is an appreciable distance between them which enables unimpeded transport in the direction of axis 35. However, by operating lifting device 31 the rails 2, 3 are lowered, the flanged parts 18, 19 coming to bear on the roller chain 27 and the roller track 26, respectively. Of course, the reverse operation is possible, that is to say the roller chain 27 and roller track 26 are raised whilst the rails 2, 3 remain stationary.

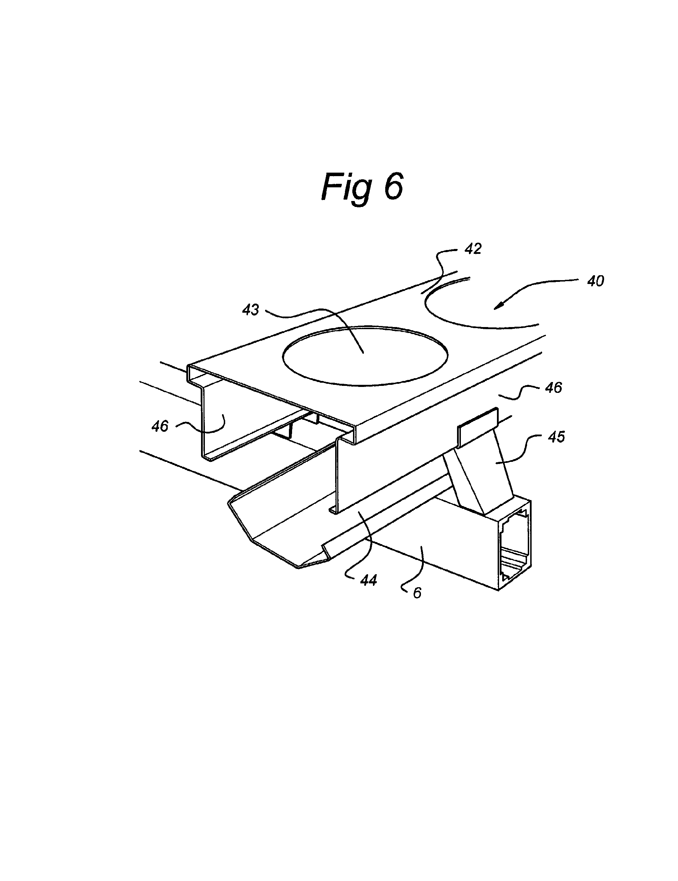

A variant of the trough-like construction is shown in Fig. 6. The container is indicated in its entirety by 40. The trough-like construction consists of essentially vertical walls 46 located opposite one another. These walls are no longer linked at the bottom but at the top by a linking plate 42 that is provided with openings 43 for accommodating pots. In the drawing, plate 42 is constructed to accommodate a single row of pots in line. It will be understood that several rows, which may or may not be offset, can be made. A drip tray 44 is present. In this structure it is essential that the side plates are firmly joined to member 6 and linking plates 45 are present for this purpose.

It will be understood that the above mainly describes a concept. That is to say, primarily protection is requested for the concept of moving relatively elongated trough-like constructions for accommodating plants, instead of tables, around greenhouses or the like. In principle it is possible to mount two troughs on the member instead of a single trough or to make the trough-like construction wider. The important aspect is always that the trough-like construction and more particularly the vertical parts thereof are also load-bearing, so that the frame consisting of the members 6 can be of particularly simple construction.

Variants that fall within the scope of the appended claims will be immediately apparent to those skilled in the art on reading the above.

## Claims

1. System comprising:
two parallel spaced apart stationary rails (2, 3) arranged; and
a number of elongated containers for plants that can be moved over said rails;
each container comprising an elongated carrier for said plants and at least two frame sections (6) supporting said carrier,
**characterised in that**, said frame sections (6) are provided with displacement means for movement along said rails and **in that** each container is provided with individual frame sections.

2. System according to Claim 1, wherein the spacing between the containers is varied by different movement over said rails.

3. System according to one of the preceding claims, wherein there are drive means (20) for moving said containers with respect to said rails.

4. System according to one of the preceding claims, wherein the ends of said beams (6) can be placed one inside the other.

5. System according to Claim 4, wherein the beams constitute the stops for carriers positioned next to one another.

6. System according to Claim 4 or 5, wherein said ends of said beams are constructed such that when placed one inside the other the height of the end of one member is moved relative to that of the end of the other member interacting therewith.

7. System according to one of the preceding claims, wherein said drive means are constructed to move said containers in accordance with a longitudinal axis of said beams and to engage on said beams.

8. System according to one of the preceding claims, wherein said carriers are provided with water collection means (13) in the form of a receptacle, which water-collection means in the form of a receptacle have a sloping inlet part extending in the direction of the longitudinal axis of the beams such that inlet parts (14) of adjacent containers are able to move over one another.

9. System according to one of the preceding claims, wherein said drive means (25) are constructed to move said container in accordance with the longitudinal axis (24) of said trough-like construction.

10. System according to Claim 9, wherein said trough-like construction has parts extending essentially horizontally outwards on which drive means (27) engage.

11. System according to Claim 9 or 10, comprising a lifting/lowering device (29, 30) for said rails and/or said drive means for moving said containers in accordance with the longitudinal axis of said trough-like construction.

12. System according to one of the preceding claims, wherein said carrier is provided with water discharge means, having a common control for said water discharge means.

13. System according to one of the preceding claims, wherein said carrier comprises an elongated structure (5, 40) having a longitudinal axis (24) with two spaced apart parts extending essentially vertically with a height (h) of at least 50 mm.

14. System according to Claim 13, wherein the length of said frame sections is greater than the width of said trough-like construction.

15. System according to one of the preceding claims, wherein said displacement means comprise wheels.

16. System according to one of the preceding claims, wherein said displacement means comprise slider blocks (11).

17. Assembly comprising a system according to one of the preceding claims with at least 100 containers for plants as well as a station for carrying out a treatment on said plants.
